# EUROPEAN PATENT APPLICATION

(11) **EP 4 606 735 A1**
(43) Date of publication of application: **27.08.2025**
(21) Application number: 23891135.8
(22) Date of filing: 01.09.2023
(51) Int. Cl.: B65G 1/00, B65G 1/137

(54) **TRANSPORT VEHICLE SYSTEM**

(30) Priority: 15.11.2022 JP 2022182543
(71) Applicant: Murata Machinery, Ltd., Kyoto-shi, Kyoto 601-8326 (JP)
(72) Inventor: MAEDA Masaaki, Inuyama-shi, Aichi 484-8502 (JP)
(74) Representative: Stöckeler, Ferdinand
(86) International application number: PCT/JP2023/032105
(87) International publication number: WO 2024/105976

(57) **Abstract**

The transport vehicle system (100) includes: a transport vehicle (1) including two transport-vehicle-side supports (15); a buffer (3) into which roll material (R) is temporarily carried from the transport vehicle (1) before being transported from a first process to a second process; and a controller (7) configured to control the transport vehicle (1). The buffer (3) includes two buffer-side supports (35). The controller (7) determines, based on the winding direction of the roll material (R) before being carried into the buffer (3) and the winding direction of the roll material (R) required in the second process, whether the winding direction needs to be changed, and if it is determined that the winding direction needs to be changed, causes the transport vehicle (1) to perform a winding-direction-changing operation including an operation of reversing the traveling direction of the transport vehicle (1) and an operation of changing placement of the roll material (R) between the two buffer-side supports (35).

## Description

### Technical Field

An aspect of the present invention relates to a transport vehicle system.

### Background Art

Patent Document 1 discloses a transport vehicle system configured to transport an article between a station and a transport vehicle (traveling vehicle) provided with two transport-vehicle-side supports (first and second placement platforms) in a traveling direction. The transport vehicle described in Patent Document 1 can change directions to travel with either of the two transport-vehicle-side supports serving as a forward portion thereof in the traveling direction, and determines which one to travel with as the forward portion so that it can efficiently transfer the article to the station. In such a transport vehicle system, when a roll material including a product wound around a core is received from a transport vehicle and delivered to a station, the winding direction of the roll material in delivering the roll material to the station can be selectively changed depending on which one to serve as the forward portion when approaching to the station.

### Citation List

### Patent Literature

Patent Document 1: Japanese Unexamined Patent Publication No. 2013-3855

### Summary of Invention

### Technical Problem

In the transport vehicle system described above, when an article is transported to a station, it may be desired to temporarily store a roll material in a buffer instead of directly transporting the article from a station of a previous process to a station of a next process. In this case, it is preferable that the roll material can be received from and delivered to the buffer in consideration of the winding direction of the roll material required in the next process.

However, for the purpose of improving transport efficiency, it may be desired to dispose the two supports in a manner spaced along the traveling direction of the transport vehicle so that two roll materials can be held also on the buffer side. In this case, depending on the conditions around the buffer, such as the presence of another device or another transport vehicle near the buffer, a roll material cannot be passed from one of two transport-vehicle-side supports onto a desired one of two buffer-side supports, and as a result, the winding direction of the roll material may fail to be selectively changed.

In view of this, it is an object of an aspect of the present invention to provide a transport vehicle system that can deliver a roll material to a buffer in accordance with the winding direction of the roll material required in the next process, regardless of conditions around the buffer.

### Solution to Problem

An invention according to an aspect of the present invention includes: a transport vehicle including two transport-vehicle-side supports disposed to be spaced in a traveling direction such that, for a roll material including a product wound around a core, extending directions of the core are parallel to one another; a buffer into which the roll material is temporarily carried from the transport vehicle before being transported from a first process to a second process that is a process following the first process; and a controller configured to control the transport vehicle. The buffer includes two buffer-side supports disposed to be spaced in the traveling direction of the transport vehicle such that the extending direction of the core is parallel to one another. The controller includes: a determination unit configured to, based on the winding direction of the roll material before being carried into the buffer and the winding direction of the roll material required in the second process, determine whether the winding direction needs to be changed; and an instruction unit configured to, in a case where the determination unit has determined that the winding direction needs to be changed, cause the transport vehicle to perform a winding-direction-changing operation including an operation of reversing the traveling direction of the transport vehicle and an operation of changing placement of the roll material between the two buffer-side supports.

The operation of reversing herein means an operation of switching the front and rear orientations of the transport vehicle, and the operation of changing placement herein means an operation of temporarily placing the roll material on one of the buffer-side supports, moving the transport vehicle slightly to place it on the other transport-vehicle-side support, and further moving the transport vehicle to change the placement onto the other buffer-side support. In the transport vehicle system thus configured, the operation of reversing the traveling direction of the transport vehicle is performed if it has been determined that the winding direction needs to be changed on the basis of the winding direction of the roll material before the roll material is carried into the buffer and the winding direction of the roll material required in the second process. This allows the winding direction of the roll material to be changed to the winding direction required in the second process. In the transport vehicle system thus configured, even if the roll material cannot be passed from one of the transport-vehicle-side supports onto one of the buffer-side supports, the roll material can be passed onto the desired buffer-side support because the roll material is passed (placement thereof is changed) between the two buffer-side supports. Consequently, regardless of conditions around the buffer, the roll material can be delivered to the buffer in accordance with the winding direction of the roll material required in the second process that is the next process.

The invention according to an aspect of the present invention may further include an automated warehouse including: a rack configured to allow a plurality of the roll materials to be placed on the rack; and a stacker crane configured to receive and deliver each roll material between the buffer and the rack, and the instruction unit may cause the transport vehicle to perform the winding-direction-changing operation when the roll material is carried into the buffer. With this configuration, the roll materials can be stored in the automated warehouse via the buffer, and thus the number of the roll materials temporarily stored can be increased. Furthermore, in the automated warehouse, the roll materials can be stored in accordance with the winding direction thereof required in the second process.

In the invention according to an aspect of the present invention, the controller may further include an acquisition unit configured to acquire a storage status of the roll materials to the automated warehouse and, in a case where the determination unit has determined that the winding direction needs to be changed, the instruction unit may cause the transport vehicle to perform the winding-direction-changing operation when the roll material is carried out from the buffer instead of when the roll material is carried into the buffer. When the winding-direction-changing operation is performed and the roll material is carried into the buffer, it takes more time than when the roll material is carried into the buffer without performing the winding-direction-changing operation. With this configuration, when the storage status is high, the roll material can be carried into the buffer in less time, and thus the delay in the process of carrying the roll material into the buffer can be reduced.

In the invention according to an aspect of the present invention, the rack may include a first rack and a second rack disposed opposite to each other so as to sandwich a traveling area of the stacker crane, and the buffer may be provided in each of the first rack and the second rack and, when the roll material to be carried out from the buffer provided in one of the first rack and the second rack is the roll material carried in from the other of the first rack and the second rack, the instruction unit may cause the transport vehicle to perform the winding-direction-changing operation. When the roll material to be carried out from the buffer provided in one of the first rack and the second rack is the roll material R carried in from the other of the first rack and the second rack, the winding direction of the roll material to be received by the transport vehicle is opposite to the winding direction of the roll material when carried into the buffer. With this configuration, even in such a case, the instruction unit causes the transport vehicle to perform the winding-direction-changing operation, and thus the winding direction thereof can be adjusted again to the winding direction of the roll material R when carried into the buffer, that is, the winding direction of the roll material required in the next process.

### Advantageous Effects of Invention

According to an aspect of the present invention, the winding direction of the roll material can be selectively changed when the roll material is delivered to the buffer, regardless of conditions around the buffer.

### Brief Description of Drawings

[FIG. 1] FIG. 1 is an overall schematic diagram of a transport vehicle system according to an embodiment.
[FIG. 2] FIG. 2 is a side view of a transport vehicle and a buffer included in FIG. 1 when viewed from the Y direction.
[FIG. 3] FIG. 3 is a plan view of the buffer included in FIG. 1.
[FIG. 4] FIG. 4 is a plan view of the transport vehicle included in FIG. 1.
[FIG. 5] FIG. 5 is a block diagram illustrating a functional structure of the transport vehicle system.
[FIG. 6] FIG. 6 is a chart illustrating the winding direction of a roll material in processing devices in a previous process and a next process.
[FIG. 7] FIG. 7 is a chart illustrating an example of a table used as criteria for determining whether the winding direction needs to be changed at the time of carriage into a buffer.
[FIG. 8] FIG. 8 is a chart illustrating an example of an operation when the transport vehicle delivers the roll material to the buffer.
[FIG. 9] FIG. 9 is a chart illustrating an example of the operation when the transport vehicle delivers the roll material to the buffer.
[FIG. 10] FIG. 10 is a chart illustrating an example of an operation when the transport vehicle receives the roll material from the buffer.
[FIG. 11] FIG. 11 is a chart illustrating an example of the operation when the transport vehicle receives the roll material from the buffer.
[FIG. 12] FIG. 12 is an overall schematic diagram of a transport vehicle system according to a modification.

### Description of Embodiments

A transport vehicle system 100 according to an embodiment will now be described with reference to the drawings. In the description of the drawings, like elements are designated by like reference signs, and duplicate description is omitted.

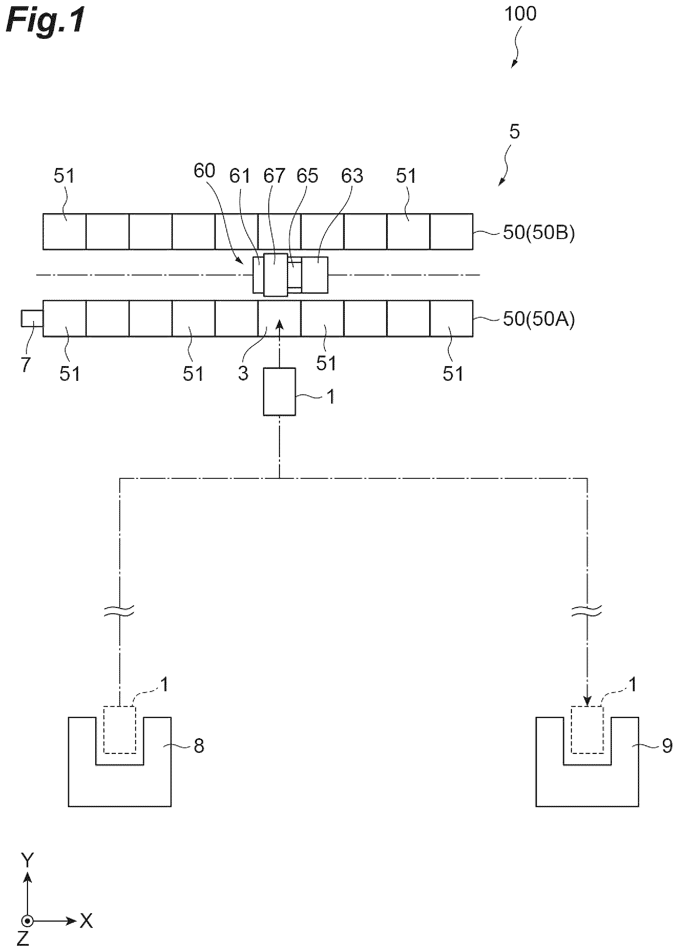

The transport vehicle system 100 is a system configured to temporarily store in an automated warehouse 5 a roll material R transported by a transport vehicle 1 from a processing device 8 for a previous process (first process) and transport the roll material R to a processing device 9 for a next process (second process). As illustrated in FIG. 1, the transport vehicle system 100 includes the transport vehicle 1, a buffer 3, the automated warehouse 5, and a controller 7. In the present embodiment, for convenience of explanation, a direction in which a stacker crane 60 included in the automated warehouse 5 travels may be denoted as the X direction, a direction that is orthogonal to the X direction in plan view and in which the transport vehicle 1 enters the buffer 3 may be denoted as the Y direction, and the vertical direction may be denoted as the Z direction. The X direction, the Y direction, and the Z direction are orthogonal to each other.

The roll material R to be transported in the present embodiment will be described. The roll material R is a member including a product P wound around a core C. The product P in the present embodiment is an aluminum foil or stainless steel foil to be used in secondary batteries. Other examples of the product P include a steel sheet, a copper sheet, an aluminum sheet, an electric wire (cable), paper, fiber, and yarn. The core C is a rod-shaped member formed of resin such as fiber reinforced plastics (FRP) or metal.

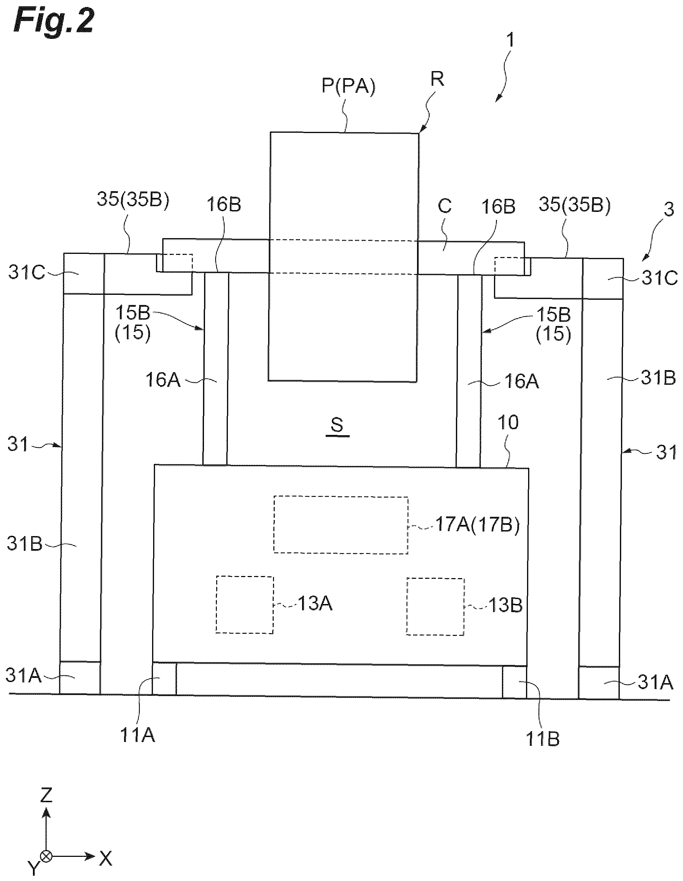

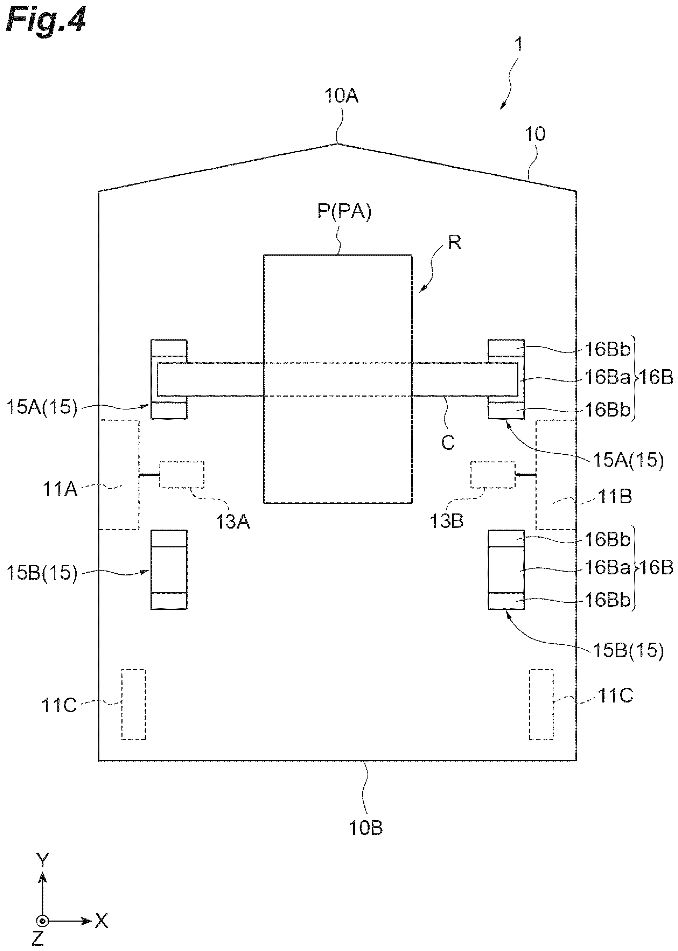

The transport vehicle 1 is an automatic guided vehicle (AGV) and travels along a predetermined route. In the present embodiment, the transport vehicle 1 may be provided only singly, or may be provided in plurality. Transport of the roll material R by the transport vehicle 1 is controlled by the controller 7 that is provided to be able to communicate with the transport vehicle 1. As illustrated in FIGS. 2 and 4, the transport vehicle 1 includes a body 10, a left drive wheel 11A, a right drive wheel 11B, driven wheels 11C, 11C, a left wheel driver 13A, a right wheel driver 13B, transport-vehicle-side supports 15, and support drivers 17A, 17B.

The body 10 supports the left drive wheel 11A, the right drive wheel 11B, the driven wheels 11C, 11C, the left wheel driver 13A, the right wheel driver 13B, the transport-vehicle-side supports 15, and the support drivers 17A, 17B. The body 10 has a front part 10A configured to serve as a travel-direction forward portion in forward traveling and a rear part 10B configured to serve as a travel-direction rearward portion in the forward traveling. When the transport vehicle 1 has performed an operation of reversing the traveling direction, which will be described later in detail, the rear part 10B serves as the travel-direction forward portion and the front part 10A serves as the travel-direction rearward portion. Herein, traveling with the front part 10A serving as the travel-direction forward portion is referred to as the forward traveling, and traveling with the rear part 10B serving as the travel-direction forward portion is referred to as backward traveling.

The left drive wheel 11A and the right drive wheel 11B are provided on a lower surface of the body 10, provided near the center of the body 10 in the traveling direction. The driven wheels 11C, 11C are provided on the lower surface of the body 10, provided at an end in the traveling direction (on the rear part 10B side in the present embodiment).

The left wheel driver 13A drives the left drive wheel 11A. The right wheel driver 13B drives the right drive wheel 11B. The left drive wheel 11A and the right drive wheel 11B are, for example, electric motors. The transport vehicle 1 in the present embodiment drives each of the left drive wheel 11A and the right drive wheel 11B independently. The transport vehicle 1 thus configured can travel in a curved manner and turn by controlling the speed and/or direction of rotation of the electric motors that drive the left drive wheel 11A and the right drive wheel 11B. For example, the transport vehicle 1 can travel in a curved manner by rotating the left drive wheel 11A and the right drive wheel 11B at different rotation speeds while rotating them in the same direction, and can turn by rotating the left drive wheel 11A and the right drive wheel 11B at the same rotation speed while rotating them in opposite directions.

The transport vehicle 1 can perform a reversing operation (also called a turn operation) of switching orientations of the front part 10A and the rear part 10B by controlling the left wheel driver 13A and the right wheel driver 13B. The reversing operation includes: a switch turn of switching the orientations of the front part 10A and the rear part 10B by entering in a direction different from an intended direction (traveling in a curved manner), then changing the travel direction, and entering in the intended direction; and a spin turn of switching the front part 10A and the rear part 10B by turning on the spot.

The transport-vehicle-side supports 15 include a first transport-vehicle-side support 15A and a second transport-vehicle-side support 15B. The first transport-vehicle-side support 15A and the second transport-vehicle-side support 15B are disposed to be spaced in the traveling direction (front-back direction) such that the extending directions of the core C in the roll material R are parallel to one another. In the transport-vehicle-side supports 15 in the present embodiment, when one of the first transport-vehicle-side support 15A and the second transport-vehicle-side support 15B holds the roll material R, the other of the first transport-vehicle-side support 15A and the second transport-vehicle-side support 15B cannot hold a roll material R because their product portions PA will be in contact with each other. However, in the transport-vehicle-side supports 15 in the present embodiment, when one of the first transport-vehicle-side support 15A and the second transport-vehicle-side support 15B holds the roll material R, the other of the first transport-vehicle-side support 15A and the second transport-vehicle-side support 15B can still hold an empty roll material R (i.e., only a core C).

Each of the first transport-vehicle-side support 15A and the second transport-vehicle-side support 15B raises and lowers the corresponding roll material R in the Z direction. Specifically, each of the first transport-vehicle-side support 15A and the second transport-vehicle-side support 15B includes a pair of body portions 16A, 16A and a pair of contact portions 16B, 16B. Each of the pair of body portions 16A, 16A is, for example, a linear motion mechanism configured to be able to raise and lower the corresponding contact portion 16B. Each of the pair of contact portions 16B, 16B supports both ends of the core C of the corresponding roll material R from below. Each of the pair of contact portions 16B, 16B has a placement portion 16Ba, which is formed in a V-shape when viewed from the extending direction (X-direction) of the core C, and supports the core C in a manner positioned in the Y direction. Stoppers 16Bb are provided at both ends of each contact portion 16B in the Y direction to prevent the core C from falling out of the contact portion 16B.

The support driver 17A is a driving source configured to drive the body portions 16A of the first transport-vehicle-side support 15A, and is a motor, for example. The support driver 17B is a driving source configured to drive the body portions 16A of the second transport-vehicle-side support 15B, and is a motor, for example. The first transport-vehicle-side support 15A and the second transport-vehicle-side support 15B can be raised and lowered independently of each other.

When the transport vehicle 1 receives a roll material R from the processing device 8, it enters the processing device 8 by traveling forward, and receives the roll material R with the first transport-vehicle-side support 15A. After receiving the roll material R, the transport vehicle 1 exits from the processing device 8 by traveling backward. Subsequently, the transport vehicle 1 reverses the travel direction to travel forward to the buffer 3. Details of when the transport vehicle 1 delivers the roll material R to the buffer 3 and details of when the transport vehicle 1 receives the roll material R from the buffer 3 will be described later in detail. When the transport vehicle 1 delivers the roll material R to the processing device 9, it travels forward to enter the processing device 9 with the roll material R supported by the first transport-vehicle-side support 15A.

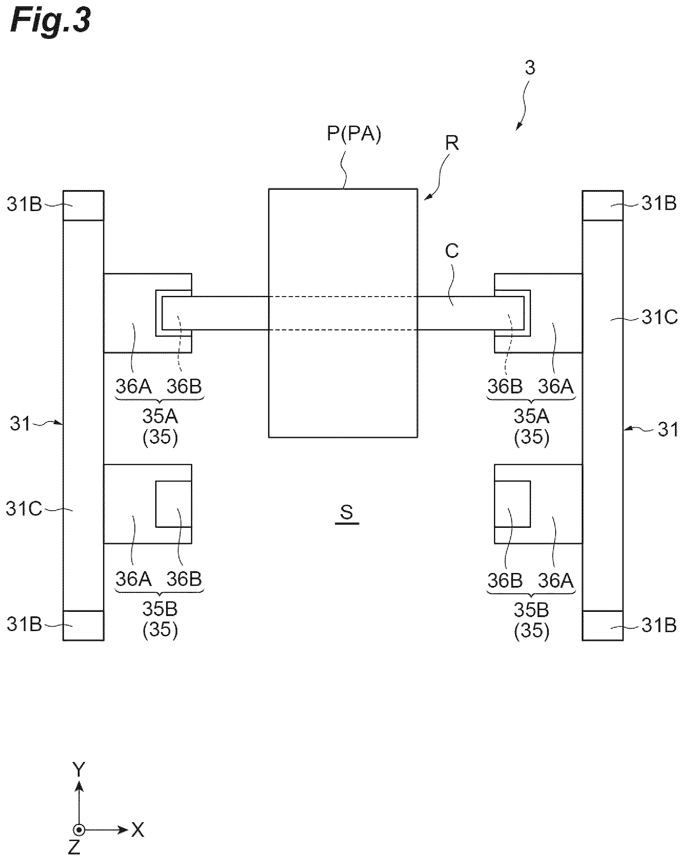

The buffer 3 temporarily holds the roll material R before transporting it from the processing device 8 in the previous process to the processing device 9 in the next process. The buffer 3 receives the roll material R from the transport vehicle 1 and also receives the roll material R from the stacker crane 60. As illustrated in FIGS. 2 and 3, the buffer 3 includes main frames 31 and buffer-side supports 35. The buffer 3 in the present embodiment is disposed in a section of a first rack 50A.

Each main frame 31 includes a base portion 31A, a pair of upright portions 31B, 31B, and an attachment portion 31C. The main frame 31 is formed in a frame shape by the base portion 31A, the pair of upright portions 31B, 31B, and the attachment portion 31C. The base portion 31A is a rectangular member installed on an installation surface and extending in the Y direction. The pair of upright portions 31B, 31B are rectangular members disposed upright from both ends of the base portion 31A in the Y direction and extending in the Z direction. The attachment portion 31C is connected to the pair of upright portions 31B, 31B at their ends opposite to their ends to which the base portion 31A is connected. The attachment portion 31C is a rectangular member extending in the Y direction.

The buffer-side supports 35 include a first buffer-side support 35A and a second buffer-side support 35B. The first buffer-side support 35A and the second buffer-side support 35B are disposed to be spaced in the traveling direction (front-back direction) such that the extending directions of the core C in the roll material R are parallel to one another. Like the transport-vehicle-side supports 15, in the buffer-side supports 35 in the present embodiment, when one of the first buffer-side support 35A and the second buffer-side support 35B supports the roll material R, the other of the first buffer-side support 35A and the second buffer-side support 35B cannot support a roll material R because their product portions PA will be in contact with each other. However, in the buffer-side supports 35 in the present embodiment, when one of the first buffer-side support 35A and the second buffer-side support 35B supports the roll material R, the other of the first buffer-side support 35A and the second buffer-side support 35B can still support only a core C (empty roll material R).

Each of the first buffer-side support 35A and the second buffer-side support 35B supports the roll material R. Specifically, each of the first buffer-side support 35A and the second buffer-side support 35B includes a pair of restriction portions 36A, 36A and a pair of contact portions 36B, 36B. Each of the pair of restriction portions 36A, 36A restricts the movement of the core C in the X direction and the Y direction. The pair of contact portions 36B, 36B support both ends of the core C of the roll material R from below.

In the buffer 3, an entry space S into which the transport vehicle 1 can enter is formed. The entry space S is a space sandwiched between the pair of main frames 31, 31 disposed opposite to each other in the X direction. The transport vehicle 1 can enter the entry space S from only one direction along the Y direction and exit from only the one direction along the Y direction. The buffer 3 may be configured to allow entry or exit from both directions along the Y direction, depending on the position of the buffer 3. The first buffer-side support 35A and the second buffer-side support 35B are arranged along the entry direction and the exit direction of the transport vehicle 1 described above. In the present embodiment, the transport vehicle 1 can enter the entry space S along the Y direction only from the second buffer-side support 35B side and can exit from the entry space S along the Y direction only from the second buffer-side support 35B. The first buffer-side support 35A and the second buffer-side support 35B are disposed above the transport vehicle 1 that has entered the entry space S.

The following describes an operation when the transport vehicle 1 delivers a roll material R to the buffer 3 thus configured. Basically, the transport vehicle 1 enters the entry space S with the roll material R supported by a transport-vehicle-side support 15 at a higher position than that of a buffer-side support 35, and the roll material R is delivered to the buffer 3 by lowering the position of the roll material R at the position of the buffer-side support 35. The following describes an operation when the transport vehicle 1 receives the roll material R from the buffer 3 thus configured. Basically, the transport vehicle 1 enters the entry space S with the height position of the contact portion 16B lowered such that it is lower than that of the buffer-side support 35, and supports the core C of the roll material R by raising the height position of the contact portion 16B at the position of the buffer-side support 35. The transport vehicle 1 exits from the buffer 3 with the core C supported in this manner.

In the present embodiment, the transport vehicle 1 will come into contact with the stacker crane 60 when continuing to enter the entry space S, and thus a range within which the transport vehicle 1 can enter the entry space S is limited. When the transport vehicle 1 enters forward into the entry space S with the roll material R held by the first transport-vehicle-side support 15A, it can pass the roll material R onto either of the first buffer-side support 35A and the second buffer-side support 35B by adjusting a distance it enters. However, when the transport vehicle 1 enters forward into the entry space S with the roll material R held by the second transport-vehicle-side support 15B, it can pass the roll material R only onto the second buffer-side support 35B due to the above-described limitation.

When the transport vehicle 1 enters backward into the entry space S with the roll material R held by the second transport-vehicle-side support 15B, it can pass the roll material R onto either of the first buffer-side support 35A and the second buffer-side support 35B by adjusting a distance it enters. However, when the transport vehicle 1 enters backward into the entry space S with the roll material R held by the first transport-vehicle-side support 15A, it can pass the roll material R only onto the second buffer-side support 35B due to the above-described limitation.

As illustrated in FIG. 1, the automated warehouse 5 includes a pair of racks 50, 50 and the stacker crane 60. The pair of racks 50, 50 (the first rack 50A and a second rack 50B) are disposed opposite to each other in the Y direction so as to sandwich a traveling area of the stacker crane 60. Each of the racks 50 stores a plurality of roll materials R. Each of the racks 50 includes a plurality of storage sections 51 on which roll materials R can be placed. The storage sections 51 are arranged in the X direction and the Z direction. Carrying in and carrying out of the roll materials R into and from the storage sections 51 are performed by the stacker crane 60.

The stacker crane 60 receives and delivers a roll material R between each storage section 51 included in the racks 50 and the buffer 3. The stacker crane 60 mainly includes a traveling unit 61, a mast 63, a lifting unit 65, and a transfer unit 67. The traveling unit 61 moves along the X direction while supporting the mast 63 and the transfer unit 67. The traveling unit 61 is driven by a driver (not illustrated). The mast 63 is a columnar member installed upright from the traveling unit 61 and extending in the Z direction. The lifting unit 65 is provided to be movable in the vertical direction along the extending direction of the mast 63. The lifting unit 65 is driven by a driver (not illustrated).

The transfer unit 67 is provided to the lifting unit 65. The transfer unit 67 is provided to be extendable along the Y direction. The transfer unit 67 transfers a roll material R between the racks 50 or to and from the buffer 3 by extending and retracting. In the transfer unit 67, a recess (not illustrated) for supporting the roll material R is formed. The recess extends in the X direction. The recess is formed substantially in the center of the transfer unit 67 in the Y direction. The recess is formed to support the product portion PA of the roll material R and stably position the roll material R such that the extending direction of the core C is aligned with the X direction.

When the stacker crane 60 delivers the roll material R to the buffer 3, it lowers the position of the transfer unit 67 from a position higher than the buffer-side supports 35 to a position lower than the first buffer-side support 35A, with the roll material R supported by the transfer unit 67. When the stacker crane 60 receives the roll material R from the buffer 3, it raises the height position of the transfer unit 67 from a position lower than the buffer-side supports 35, thereby causing the transfer unit 67 to support the roll material R.

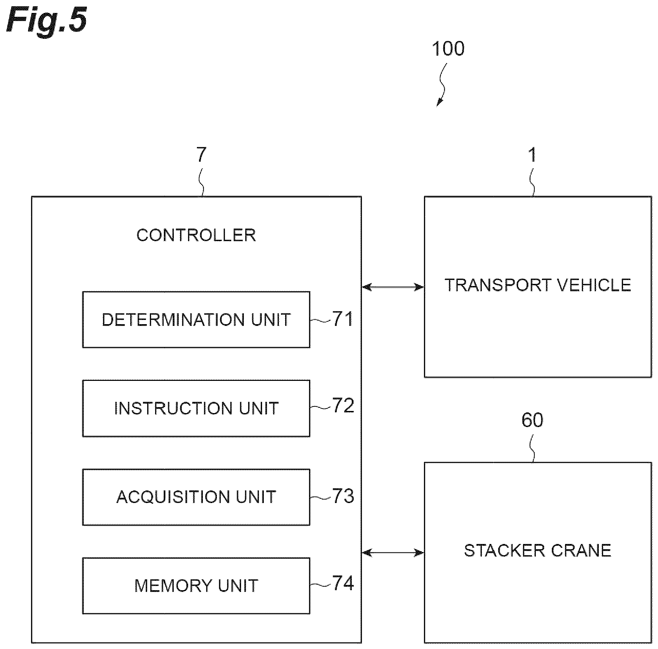

The controller 7 illustrated in FIGS. 1 and 5 controls the transport vehicle 1 and the automated warehouse 5. The controller 7 is provided to be able to communicate with the transport vehicle 1 and the automated warehouse 5 by wire or radio. The controller 7 is disposed, for example, in a section of the racks 50 included in the automated warehouse 5. The controller 7 includes: an input/output interface for inputting/outputting signals or the like to and from outside; memory media such as a read only memory (ROM) storing programs and information for processing and a random access memory (RAM) configured to temporarily store data; a central processing unit (CPU); and communication circuits. The controller 7 forms a determination unit 71, an instruction unit 72, and an acquisition unit 73 that store input data in the RAM on the basis of signals output by the CPU, load programs stored in the ROM into the RAM, and perform various processes by executing the programs loaded into the RAM.

The following describes the winding direction of a roll material R. As described above, the roll material R includes a product P wound around a core C, and the winding direction of the roll material R means a direction in which the product P is wound around the core C when viewed from the extending direction of the core C. In the roll material R, the product P is paid out by rotating the core C in the winding direction, and the product P is wound by rotating the core C in a direction opposite to the winding direction.

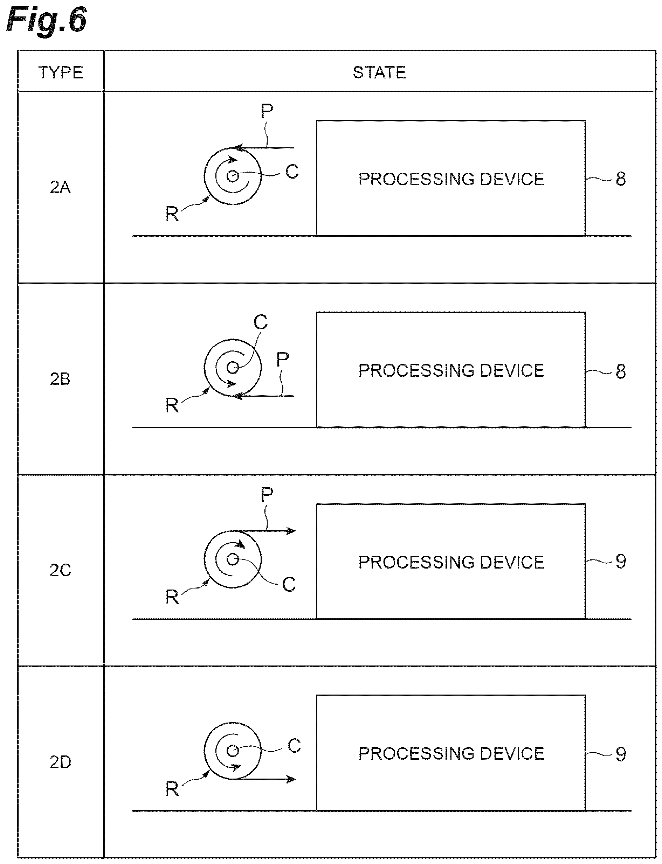

The winding direction of the roll material R to be received from the processing device 8 and passed onto the transport vehicle 1 differs depending on the type of the processing device 8 in the previous process. More specifically, as illustrated in FIG. 6, when the roll material R and the processing device 8 are viewed from the extending direction of the core C such that the processing device 8 is positioned on the right side of the roll material R, a mode (type 2A) in which the product P is wound from the upper side of the roll material R and a mode (type 2B) in which the product P is wound from the lower side of the roll material R are used. When the transport vehicle 1 receives the roll material R from the processing device 8 of the type 2A, it receives the roll material R the winding direction of which is right-handed (clockwise), and when it receives the roll material R from the processing device 8 of the type 2B, it receives the roll material R the winding direction of which is left-handed (counterclockwise). In other words, the winding direction of the roll material R differs from each other when the roll material R is received from the processing device 8 of the type 2A and when the roll material R is received from the processing device 8 of the type 2B.

The winding direction of the roll material R to be received from the transport vehicle 1 and delivered to the processing device 9 differs depending on the type of the processing device 9 in the next process. Specifically, as illustrated in FIG. 6, when the roll material R and the processing device 9 are viewed from the extending direction of the core C such that the processing device 9 is positioned on the right side of the roll material R, a mode (type 2C) in which the product P is paid out (drawn) from the upper side of the roll material R and a mode (type 2D) in which the product P is drawn from the lower side of the roll material R are used. When the transport vehicle 1 delivers the roll material R to the processing device 9 of the type 2C, it receives the roll material R the winding direction of which is right-handed (clockwise), and when it delivers the roll material R to the processing device 9 of the type 2D, it receives the roll material R the winding direction of which is left-handed (counterclockwise). In other words, the winding direction of the roll material R differs from each other when the roll material R is delivered to the processing device 9 of the type 2C and when the roll material R is delivered to the processing device 9 of the type 2D.

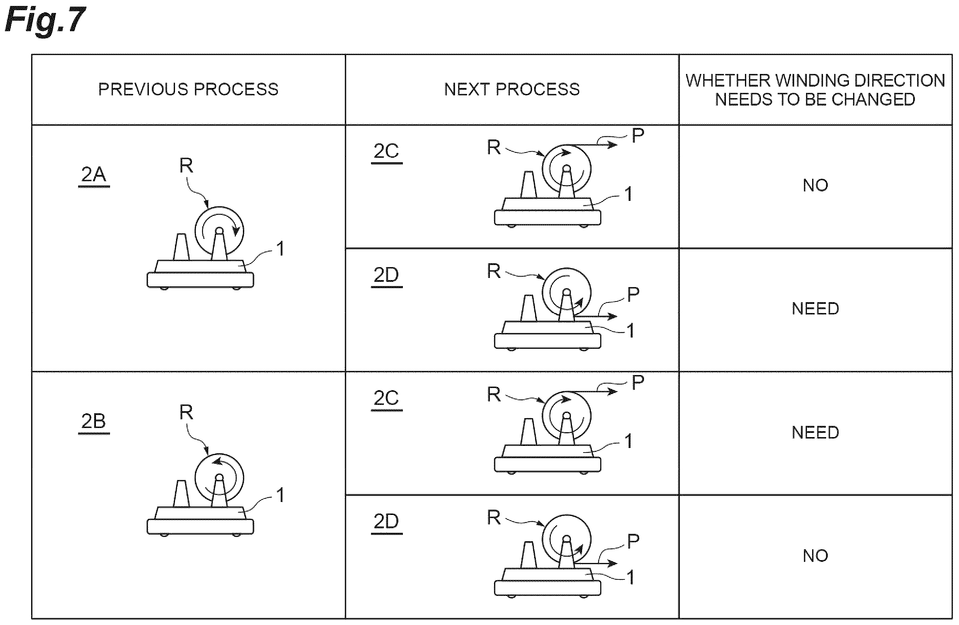

In a case in which the processing device 8 is used in the previous process and the processing device 9 is used in the next process, the winding direction of the roll material R may need to be changed when the roll material R is transported from the processing device 8 to the processing device 9. Specifically, as illustrated in FIG. 7, when the roll material R is transported from the processing device 8 of the type 2A to the processing device 9 of the type 2D, and when the roll material R is transported from the processing device 8 of the type 2B to the processing device 9 of the type 2C, the winding direction of the roll material R needs to be changed.

The controller 7 illustrated in FIGS. 1 and 5 in the present embodiment determines whether the winding direction needs to be changed due to the difference in types of the processing devices 8 and 9 in the previous and next processes, and if it has determined that the winding direction needs to be changed, it controls the transport vehicle 1 to change the winding direction of the roll material R. The following describes the controller 7 in detail.

The determination unit 71 determines whether the winding direction needs to be changed on the basis of the winding direction of the roll material R before being carried into the buffer 3 and the winding direction of the roll material R, which is to be transported by the transport vehicle 1 from the buffer 3, required in the next process. A memory unit 74 stores: for example, processing-device information in which the type of the processing device 8 for the previous process and the type of the processing device 9 for the next process as illustrated in FIG. 6 are stored; and a determination table as illustrated in FIG. 7. The determination unit 71 determines whether the winding direction needs to be changed on the basis of the processing-device information and the determination table stored in the memory unit 74. The memory unit 74 may store information about processing devices other than the processing devices 8 and 9 and a determination table other than that of the relation between the processing device 8 and the processing device 9. In this case, the determination unit 71 can determine whether the winding direction needs to be changed between other devices in the same manner as in determining whether the winding direction needs to be changed between the processing device 8 and the processing device 9.

The instruction unit 72 instructs the transport vehicle 1 to perform the winding-direction-changing operation in a case where the determination unit has determined that the winding direction needs to be changed. In other words, the instruction unit 72 does not instruct the transport vehicle 1 to perform the winding-direction-changing operation in a case where the determination unit has not determined that the winding direction needs to be changed. The winding-direction-changing operation includes an operation of reversing the traveling direction of the transport vehicle 1 and an operation of changing placement of the roll material R between the first buffer-side support 35A and the second buffer-side support 35B. The operation of reversing the traveling direction means an operation of causing the transport vehicle 1 to change the traveling direction from the forward traveling to the backward traveling described above. The operation of changing placement of the roll material R means an operation of using the transport-vehicle-side supports 15 of the transport vehicle 1 to transfer the roll material R from the first buffer-side support 35A to the second buffer-side support 35B or from the second buffer-side support 35B to the first buffer-side support 35A.

The instruction unit 72 instructs the transport vehicle 1 to perform the winding-direction-changing operation when the roll material R is carried into (delivered to) the buffer 3. This allows the winding direction of roll material R received from the processing device 8 in the previous process to be aligned with the winding direction required for the processing device 9 in the next process. If a storage status is lower than a threshold, the instruction unit 72 instructs the transport vehicle 1 to perform the winding-direction-changing operation when carrying the roll material R into the buffer 3. The storage status herein indicates information such as the state of concentration of storage and the state of traffic congestion, for example, that allows determining that storage has become temporarily concentrated and that this concentration needs to be resolved. If the storage status is at the threshold or higher or is higher than the threshold, the instruction unit 72 instructs the transport vehicle 1 to perform the winding-direction-changing operation exceptionally when the roll material R is carried out from the buffer 3. In other words, the instruction unit 72 instructs the transport vehicle 1 to perform the winding-direction-changing operation when the roll material R is carried out from the buffer 3, not when the roll material R is carried in from the buffer 3.

The acquisition unit 73 acquires the storage status of roll materials R to the automated warehouse 5. The above-described storage status can be acquired from, for example, the frequency of transport requests transmitted from a higher-level controller or operation information of the stacker crane 60.

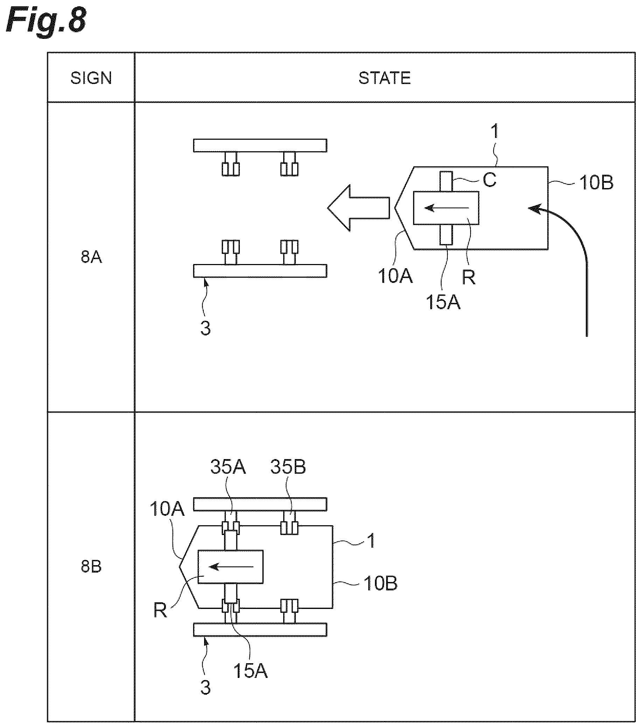

The following describes an example of an operation when the transport vehicle 1 carries a roll material R into the buffer 3. The transport vehicle 1 delivers to the buffer 3 the roll material R received from the processing device 8 in response to an instruction of the controller 7. As illustrated in FIG. 8, in carrying into the buffer 3, if the controller 7 has determined that the winding direction does not need to be changed (if the transport vehicle 1 has not been instructed to perform the winding-direction-changing operation), the transport vehicle 1 travels forward to enter the entry space S of the buffer 3 (see 8A). The transport vehicle 1 supporting the roll material R on the first transport-vehicle-side support 15A passes the roll material R onto the first buffer-side support 35A of the buffer 3 (see 8B). The roll material R passed on the first buffer-side support 35A is stored in a storage section 51 of the racks 50 by the transfer unit 67 of the stacker crane 60.

The direction of the arrow on each roll material R in FIGS. 8 to 11 indicates the winding direction of the roll material R. For example, when the direction of the arrow is pointing to the left, it indicates that the winding direction of the roll material R is left-handed (counterclockwise), and when the direction of the arrow is pointing to the right, it indicates that the winding direction of the roll material R is right-handed (clockwise).

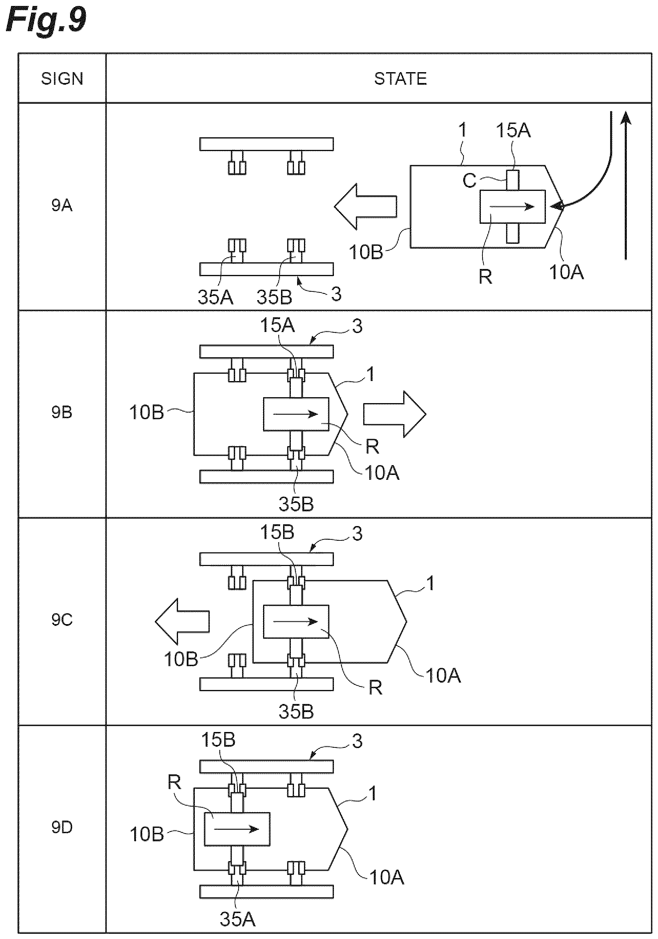

The following describes an example different from the above-described operation when the transport vehicle 1 carries the roll material R into the buffer 3. The transport vehicle 1 delivers to the buffer 3 the roll material R received from the processing device 8 in response to an instruction of the controller 7. As illustrated in FIG. 9, in carrying into the buffer 3, if the controller 7 has determined that the winding direction needs to be changed (if the transport vehicle 1 has been instructed to perform the winding-direction-changing operation), the transport vehicle 1 performs the operation of reversing the traveling direction (i.e., switching the orientations of the front part 10A and the rear part 10B) (see 9A) and travels backward to enter the entry space S of the buffer 3. The transport vehicle 1 supporting the roll material R on the first transport-vehicle-side support 15A passes the roll material R onto the second buffer-side support 35B of the buffer 3 (see 9B).

Subsequently, the transport vehicle 1 performs the operation of changing placement of the roll material R. The operation of changing placement means an operation of temporarily placing the roll material R on one of the first buffer-side support 35A and the second buffer-side support 35B, moving the transport vehicle 1 slightly to support the roll material R on the first transport-vehicle-side support 15A or the second transport-vehicle-side support 15B, and further moving the transport vehicle 1 to change placement onto the other of the first buffer-side support 35A and the second buffer-side support 35B.

More specifically, the transport vehicle 1 travels forward to move the second transport-vehicle-side support 15B below the second buffer-side support 35B on which the roll material R is supported, and raises the second transport-vehicle-side support 15B to support the roll material R (see 9C). The transport vehicle 1 then travels backward to move the second transport-vehicle-side support 15B, on which the roll material R is supported, above the first buffer-side support 35A, and lowers the second transport-vehicle-side support 15B to pass the roll material R onto the first buffer-side support 35A (see 9D). The roll material R passed on the first buffer-side support 35A is stored in a storage section 51 of the racks 50 by the transfer unit 67 of the stacker crane 60. By performing the winding-direction-changing operation as described above, the transport vehicle 1 can hold the roll material R in the buffer 3 (or the automated warehouse 5) while aligning it in the winding direction required by the processing device 9 in the next process.

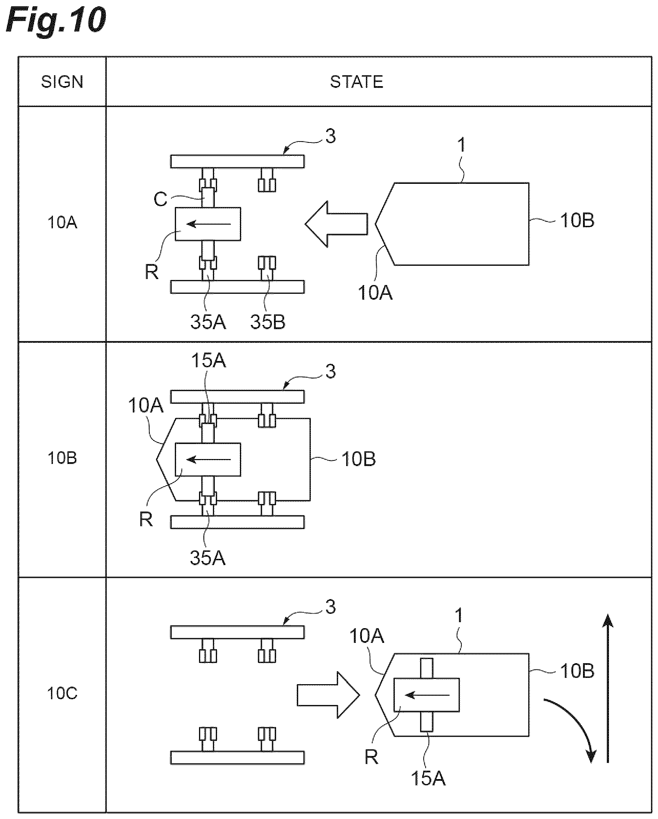

The following describes an example of an operation when the transport vehicle 1 carries the roll material R out from the buffer 3. The transport vehicle 1 delivers to the processing device 9 the roll material R received from the buffer 3 in response to an instruction of the controller 7. As illustrated in FIG. 10, when the transport vehicle 1 carries the roll material R out from the buffer 3, the transport vehicle 1 travels forward to enter the entry space S of the buffer 3 (see 10A) normally without determination by the controller 7 whether the winding direction needs to be changed. The transport vehicle 1 supports the roll material R on the first transport-vehicle-side support 15A (see 10B), and travels backward to exit from the entry space S of the buffer 3 (see 10C). The transport vehicle 1 then travels forward to move to the processing device 9 (see 10C).

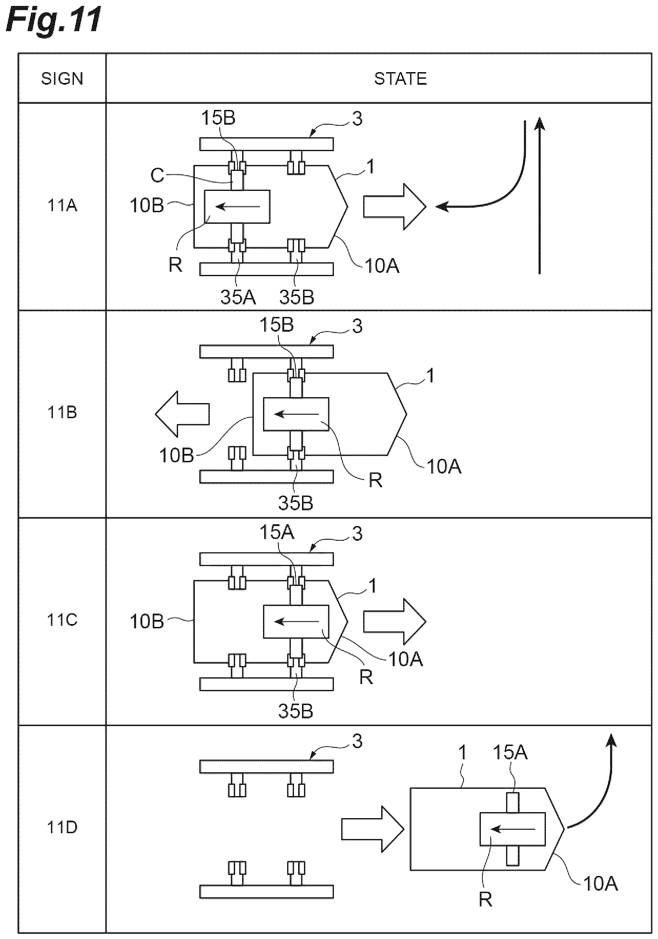

The following describes an example different from the above-described operation when the transport vehicle 1 carries the roll material R out from the buffer 3. The transport vehicle 1 delivers to the processing device 9 the roll material R received from the buffer 3 in response to an instruction of the controller 7. As illustrated in FIG. 11, in carrying out from the buffer 3, if the controller 7 has determined that the winding direction needs to be changed exceptionally as described above (if the transport vehicle 1 has been instructed to perform the winding-direction-changing operation), the transport vehicle 1 performs the operation of reversing the traveling direction, and travels backward to enter the entry space S of the buffer 3 (see 11A) and move the second transport-vehicle-side support 15B such that it is positioned below the first buffer-side support 35A of the buffer 3.

Subsequently, the transport vehicle 1 performs the operation of changing placement of the roll material R. Specifically, the transport vehicle 1 raises the second transport-vehicle-side support 15B to support the roll material R, and travels forward to move the second transport-vehicle-side support 15B such that it is positioned above the second buffer-side support 35B of the buffer 3. The transport vehicle 1 then moves the second transport-vehicle-side support 15B downward to pass the roll material R supported by the second transport-vehicle-side support 15B onto the second buffer-side support 35B (see 11B). The transport vehicle 1 then travels backward to move the first transport-vehicle-side support 15A below the first buffer-side support 35A, and moves the first transport-vehicle-side support 15A upward to support the roll material R on the first transport-vehicle-side support 15A (see 11C). The transport vehicle 1 then travels forward to move to the processing device 9, and delivers the roll material R to the processing device 9. By performing the winding-direction-changing operation as described above, the transport vehicle 1 can deliver the roll material R while aligning it in the winding direction required by the processing device 9.

The functions and effects of the transport vehicle system 100 according to the above embodiment will be described. In the transport vehicle system 100 according to the above embodiment, the operation of reversing the traveling direction of the transport vehicle 1 is performed if it has been determined that the winding direction needs to be changed on the basis of the winding direction of the roll material R before being delivered to the buffer 3 and the winding direction of the roll material R required in the process (processing device 9) next to the buffer 3. This allows the winding direction of the roll material R to be changed to the winding direction required in the next process. In the transport vehicle system 100 according to the above embodiment, even if the roll material R cannot be passed from one of the transport-vehicle-side supports 15 onto one of the buffer-side supports 35, the roll material R can be passed onto the desired buffer-side support 35 because the roll material R can be passed between the two of the first buffer-side support 35A and the second buffer-side support 35B. Consequently, regardless of conditions around the buffer 3, the roll material R can be delivered to the buffer 3 in accordance with the winding direction of the roll material R required in the next process.

In the transport vehicle system 100 according to the above embodiment, the roll materials R can be stored in the automated warehouse 5 via the buffer 3, and thus the number of roll materials R temporarily stored can be increased. Furthermore, in the automated warehouse 5, the roll material R can be stored in accordance with the winding direction thereof required in the processing device 9.

When the winding-direction-changing operation is performed and the roll material R is carried into the buffer 3, it takes more time than when the roll material R is carried into the buffer 3 without performing the winding-direction-changing operation. In the transport vehicle system 100 according to the above embodiment, when the storage status is high, the roll material R can be carried into the buffer 3 in less time, and thus the delay in the process of carrying the roll material R into the buffer 3 can be reduced.

Although an embodiment has been described above, an aspect of the present invention is not limited to the above embodiment. Various modifications can be made without departing from the gist of the invention.

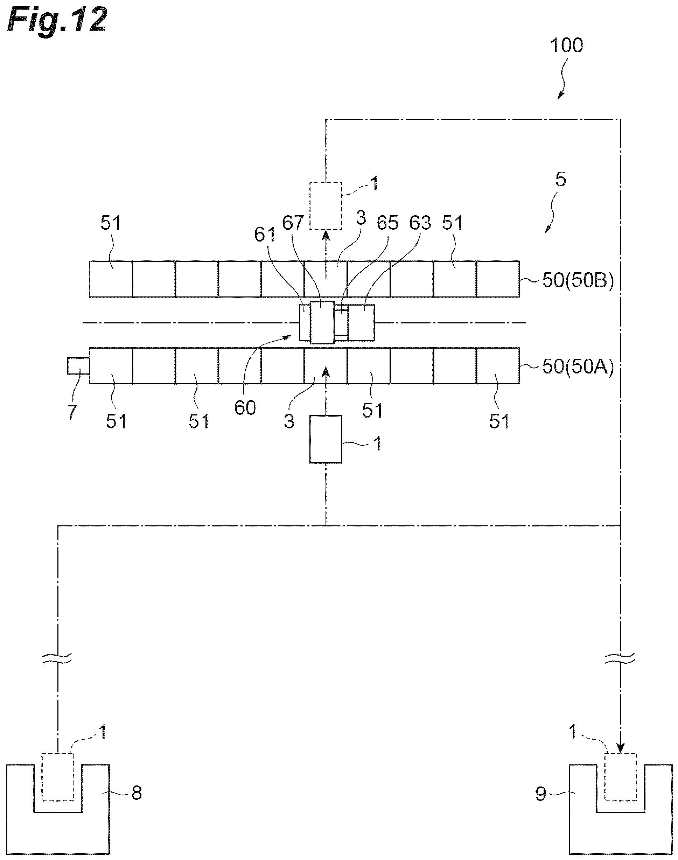

In the above embodiment, an example has been described in which the buffer 3 is formed in a section of the first rack 50A. However, as illustrated in FIG. 12, the buffer 3 formed in a section of the first rack 50A and a buffer 3 formed in a section of the second rack 50B may be provided. In this case, if the roll material R to be carried out from the buffer 3 provided in one of the first rack 50A and the second rack 50B is the roll material R carried in from the other of the first rack 50A and the second rack 50B, the instruction unit 72 may cause the transport vehicle 1 to perform the winding-direction-changing operation when carrying it out.

With the configuration of this modification, even if the buffer 3 of one of the first rack 50A and the second rack 50B cannot be used for some reason, the roll material R can be carried out to the processing device 9 in the next process. When the roll material R to be carried out from the buffer 3 provided in one of the first rack 50A and the second rack 50B is the roll material R carried in from the other of the first rack 50A and the second rack 50B, the winding direction of the roll material R to be received by the transport vehicle 1 from the buffer 3 is opposite to the winding direction of the roll material R when carried into the buffer. With the configuration of this modification, the instruction unit 72 causes the transport vehicle 1 to perform the winding-direction-changing operation, and thus the winding direction thereof can be adjusted again to the winding direction of the roll material R when carried into the buffer, that is, the winding direction of the roll material R required for the processing device 9 in the next process.

In the embodiment and the modification above, an example has been described in which the buffer 3 is configured in a section of the racks 50. However, it may be disposed in a position separate from the racks 50. Even in this case, the stacker crane 60 may be configured to transport the roll material R between the buffer 3 and the racks 50. In the above embodiment, an example has been described in which the buffer 3 is provided only singly in the first rack 50A. However, it may be provided in plurality. In the same manner, a plurality of the buffers 3 may be provided in the second rack 50B.

In the embodiment and the modifications above, an example has been described in which the transport-vehicle-side support 15 and the buffer-side support 35 each support the core C of the roll material R as illustrated in FIGS. 2 to 4. However, they may be configured to each support the product portion PA.

In the embodiment and the modifications above, an example has been described in which the winding direction of the roll material R required in the next process is stored in the memory unit 74. However, it may be included, for example, in a transport request to be transmitted from a higher-level controller. In the embodiment and the modifications above, an example has been described in which the winding direction of the roll material R before being carried into the buffer 3 is stored in the memory unit 74 in association with the processing device 8 in the previous process. However, for example, the winding direction may be determined by analyzing an image or the like acquired by an imaging device or the like provided to the transport vehicle 1. The roll material R may be provided with an identification indicating the winding direction. Even in this case, the winding direction of the roll material R can be determined by identifying the identification with a camera or a scanner.

In the embodiment and the modifications above, an example has been described in which the reversing operation is performed by the switch turn. However, the reversing operation may be performed by the spin turn.

In the embodiment and the modifications above, an example has been described in which the automated warehouse 5 is provided. However, the roll material R may be transported from the processing device 8 in the previous process to the processing device 9 in the next process via the buffer 3 only.

### Reference Signs List

- 1: transport vehicle
- 3: buffer
- 5: automated warehouse
- 7: controller
- 8: processing device
- 9: processing device
- 10: body
- 10A: front part
- 10B: rear part
- 15: transport-vehicle-side support
- 15A: first transport-vehicle-side support
- 15B: second transport-vehicle-side support
- 31: main frame
- 35: buffer-side support
- 35A: first buffer-side support
- 35B: second buffer-side support
- 50: rack
- 60: stacker crane
- 71: determination unit
- 72: instruction unit
- 73: acquisition unit
- 74: memory unit
- 100: transport vehicle system
- C: core
- P: product
- R: roll material

## Claims

1. A transport vehicle system comprising:
a transport vehicle including two transport-vehicle-side supports disposed to be spaced in a traveling direction such that, for a roll material including a product wound around a core, extending directions of the core are parallel to one another;
a buffer into which the roll material is temporarily carried from the transport vehicle before being transported from a first process to a second process that is a process following the first process; and
a controller configured to control the transport vehicle, wherein
the buffer includes two buffer-side supports disposed to be spaced in the traveling direction of the transport vehicle such that the extending directions of the core are parallel to one another, and
the controller includes:
a determination unit configured to, based on the winding direction of the roll material before being carried into the buffer and the winding direction of the roll material required in the second process, determine whether the winding direction needs to be changed; and
an instruction unit configured to, in a case where the determination unit has determined that the winding direction needs to be changed, cause the transport vehicle to perform a winding-direction-changing operation including an operation of reversing the traveling direction of the transport vehicle and an operation of changing placement of the roll material between the two buffer-side supports.

2. The transport vehicle system according to claim 1, further comprising an automated warehouse including: a rack configured to allow a plurality of the roll materials to be placed on the rack; and a stacker crane configured to receive and deliver each roll material between the buffer and the rack, wherein
the instruction unit causes the transport vehicle to perform the winding-direction-changing operation when the roll material is carried into the buffer.

3. The transport vehicle system according to claim 2, wherein
the controller further includes an acquisition unit configured to acquire a storage status of the roll materials to the automated warehouse, and
in a case where the determination unit has determined that the winding direction needs to be changed, the instruction unit causes the transport vehicle to perform the winding-direction-changing operation when the roll material is carried out from the buffer instead of when the roll material is carried into the buffer.

4. The transport vehicle system according to claim 2, wherein
the rack includes a first rack and a second rack disposed opposite to each other so as to sandwich a traveling area of the stacker crane,
the buffer is provided in each of the first rack and the second rack, and
when the roll material to be carried out from the buffer provided in one of the first rack and the second rack is the roll material carried in from the other of the first rack and the second rack, the instruction unit causes the transport vehicle to perform the winding-direction-changing operation.
